## Europäisches Patentamt

## European Patent Office

## Office européen des brevets

(11) Publication number: **0 094 138 B1**

(12) **EUROPEAN PATENT SPECIFICATION**

(45) Date of publication of patent specification: **09.09.87**

(51) Int. Cl.⁴: **C 01 B 33/18, C 01 C 1/16**

(21) Application number: **83200672.0**

(22) Date of filing: **10.05.83**

(54) **Process for preparing pure silicon dioxide having high mechanical strength, as well as silicon dioxide obtained by applying this process.**

(30) Priority: **11.05.82 NL 8201924**

(43) Date of publication of application:
**16.11.83 Bulletin 83/46**

(45) Publication of the grant of the patent:
**09.09.87 Bulletin 87/37**

(84) Designated Contracting States:
**BE DE FR GB IT NL**

(56) References cited:
**DE-A-2 121 152**
**GB-A- 765 901**
**US-A-3 094 381**
**US-A-3 271 107**
**US-A-4 026 997**

The file contains technical information
submitted after the application was filed and
not included in this specification

(73) Proprietor: **STAMICARBON B.V.**
**Mijnweg 1**
**NL-6167 AC Geleen (NL)**

(72) Inventor: **Scholten, Joseph Johannes**
**Franciscus**
**Sartonlaan 7**
**NL-6132 BC Sittard (NL)**
Inventor: **van Montfoort, Abraham**
**Pieterstraat 53**
**NL-6166 AP Geleen (NL)**

(74) Representative: **Hoogstraten, Willem Cornelis**
**Roeland et al**
**OCTROOIBUREAU DSM Postbus 9**
**NL-6160 MA Geleen (NL)**

Courier Press, Leamington Spa, England.

# 0 094 138

**Description**

The invention relates to a process for the preparation of pure silicon dioxide having high mechanical strength, by reacting with firm stirring an aqueous solution of hexafluorosilicic acid at a temperature between 25 and 45°C with an ammonium hydroxide solution having a concentration of between 15 and 35% by weight until a final pH of between 8.5 and about 9.2 has been reached in the reaction mixture, separating and washing the precipitated silicon dioxide from the reaction mixture.

A process for preparing silicon dioxide starting from hexafluorosilicic acid and ammonia is described in the US patent specification 3,271,107. In that process a 15—25% by weight hexafluorosilicic acid solution is reacted in a first step with firm stirring with an ammonium hydroxide solution, having a concentration of, for instance, 29% by weight, at a pH of 6.0—8.0. The suspension formed in this reaction, containing silicon dioxide, is subsequently reacted in a second step with less firm stirring with ammonium hydroxide for 20—120 minutes, at a pH of 8.3—9.0, upon which the precipitated silicon dioxide is separated off. The silicon dioxide thus obtained is a flocculate that can in practice only be used as a filler in, for instance, rubber or as an additive for pigments. It has been found impossible to convert the silicon dioxide thus obtained into small lumps of sufficient strength and reasonable dimensions that can be used for technical purposes, for instance as supporting material for catalysts.

From the Netherlands patent application 74,12479 a process is known for preparing ammonium fluoride, in which process silicon dioxide is obtained as byproduct by converting a 25—35% by weight solution of hexafluorisilicic acid at 40—90°C with a 15—20% by weight ammonium hydroxide solution until a suspension is obtained containing more than 1% by weight free ammonia and less than 22% by weight ammonium fluoride, as well as precipitated silicon dioxide. It is true that the silicon dioxide thus obtained consists of coarser particles, but they are extremely weak, and it has proved impossible to convert them to particles of sufficient strength.

A frequently applied process for preparing silicon dioxide in the form of strong particles having reasonable dimensions, which can be used for technical purposes, consists in the preparation of silicon dioxide in the form of a gel (silica gel) by acidifying sodium silicate, for instance with sulphuric acid, upon which the sodium salt is washed out from the gelatinous precipitate obtained and a silica hydrogel is formed. This hydrogel can be converted by drying to form a xerogel, which is known in practice as silica. This silica is in general use for technical purposes, for instance as supporting material for catalysts and as drying agent, because it is obtained in the form of small strong lumps with reasonable dimensions.

A disadvantage of this process is that the complete washing of the sodium salt is a very expensive process, which is necessary, however, for the use of the silica for technical purposes, because sodium-containing silicon dioxide is known to sinter already at low temperature, so that it loses its surface.

A process for the preparation of silicon dioxide from hexafluorosilicic acid is in principle highly attractive, because in such preparation a practically sodium-free silicon dioxide is obtained in one step, so that the expensive washing process can be omitted. This process has the additional advantage that hexafluorosilicic acid is a waste product obtained on a large scale in the preparation of wet-process phosphoric acid and superphosphates. Owing to environmental problems, this waste product may not be discharged, or only to a small degree, and is therefore available at a low price. Moreover, as coproduct in the said silicon dioxide preparation ammonium fluoride is formed, which has a relatively large sales potential and, in addition, a fairly high market price.

The disadvantage of this preparation process is, however, that the silicon dioxide is obtained in it in the form of a flocculate, that cannot be converted into a gel (see, for instance: The Chemistry of Silica by Iler, R. K., page 563). The flocculate obtained in the processes applied so far for the preparation of silicon dioxide from hexafluorosilicic acid and ammonia consists of small, very weak particles, which cannot be converted into particles having sufficient strength and reasonable dimensions.

The invention now provides a process in which, starting from hexafluorosilicic acid, silicon dioxide having a low sodium content can be prepared in the form of small lumps of reasonable dimensions and great strength, as well as a silicon dioxide product having a low sodium content and combining a high attrition resistance and mechanical strength with a relatively large surface and pore volume. Moreover, it has been found that the hydrophobic product thus obtained can be converted, via a simple process, into a hydrophilic product which otherwise has about the same qualities.

This is achieved, according to the invention, by very gradually reacting, an aqueous solution of hexafluorosilicic acid having a concentration of 6—12% by weight with the ammonium hydroxide solution by injecting one of the two reactants below the liquid surface into the other reactant or by injecting both reactants below the liquid surface into water, and subsequently separating the precipitated silicon dioxide from the reaction mixture, washing and then calcining it by heating to 900—1500°C.

The silicon dioxide obtained in this process, having a sodium content <100 ppm, consists of particles having an average diameter of between 1 and 10 mm, a specific surface, measured by the BET method, of between 10 and 100 $m^3/g$, a pore volume, measured by the mercury intrusion method, of between 0.3 and 1.0 $cm^3/g$, an attrition resistance, expressed in % loss in weight per unit of fluidizing time, <0.5% after 10 hours' fluidizing and <0.6% after 25 hours' fluidizing. The particles obtained are found to have a mechanical strength which at least equals that of α-alumina. In particular the specific surface is 10—50 $m^2/g$ and the pore volume 0.4—0.8 $cm^3/g$, with >80% of the pores having a radius of between 10 and 60 nm.

2

Preference is given to starting from a 6—12% by weight, particularly about 10% by weight hexafluorosilicic acid solution. Such a solution can be obtained by diluting and/or concentrating industrial hexafluorosilicic acid solutions, specifically solutions obtained by washing silicon-containing and fluorine-containing off-gases of a phosphate digestion and/or an evaporation section of a wet-process phosphoric acid manufacturing process.

In the present invention more highly concentrated solutions of hexafluorosilicic acid (for instance 30% by weight) can in principle be applied as well, but the disadvantage is that the yield will then show a substantial decline, for instance to about 30—40%, whereas yields of more than 98% are obtained when dilute hexafluorosilicic acid solutions are applied. Such a low yield will raise the cost of the product substantially, in part because the non-converted starting reactants and intermediate products (e.g. $(NH_4)_2SiF_6$) must then be separated off from the liquid remaining after silicon dioxide has been separated off.

As ammonium hydroxide solution a 20—30% by weight solution is preferred.

The temperature during the conversion is kept between 25 and 45°C. The reaction being highly exothermic, the reaction mixture must generally be cooled during the conversion. When lower temperatures are applied, the conversion will be extremely slow, whereas, when higher temperature are applied, silicon dioxide is obtained not in the form of small lumps but in the form of a powder. Like the temperature, the pH of the reaction mixture, too, must be kept within specific limits (8.5—9.2). Too high a pH has the disadvantage that silicon dioxide particles having a smaller strength will then be obtained, whereas too low a pH will be accompanied by a considerable decline in the yield. The pH is chosen preferably between 8.9 and 9.1.

During the conversion the reaction mixture must be firmly stirred. Preference is given in this process to a stirring rate of 150—250, specifically about 200, revolutions per minute.

Too low a stirring rate will result in the formation of silicon dioxide powder, whereas high stirring rates, e.g. 600 revolutions per minute, not only require much energy but also result in the formation of powder.

In order to obtain a good silicon dioxide product it is also important that the reactants should be contacted very gradually. This is achieved preferably by injecting one of the two reactants below the liquid surface into the other reactant or by injecting both reactants into water, again below the liquid surface. In the present process preference is given to injecting the ammonium hydroxide solution, below the surface liquid, into the hexafluorosilicic acid solution, specifically at such a rate that 2—5 parts by weight of ammonium hydroxide solution are metered per minute to 100 parts by weight of hexafluorosilicic acid solution.

From the reaction mixture formed, substantially consisting of an ammonium fluoride solution with solid silicon dioxide, the silicon dioxide is separated off, for instance by filtration, decantation or centrifugation. The silicon dioxide separated off is washed out well. As washing liquid, water as well as a diluted solution of a mineral acid, for instance $HNO_3$, can be used. The advantage of washing with acid is that it will even further reduce the calcium content and the fluorine content of the product. The washed product is subsequently dried and can be broken to form fairly strong lumps with dimensions to e.g. 30 mm. This formation of strong lumps may perhaps be explained by the fact that by applying highly specific reaction conditions a silicon precipitate is obtained consisting of a flocculate with a little hydrogel functioning as an adhesive as it were. The lumps obtained are subsequently calcined at a temperature between 900 and 1500°C, preferably 1000—1300°C, in which process small lumps are obtained having very great strength. If so desired, these small lumps (1—10 mm) can be converted by breaking or grinding into smaller particles (e.g. 1—3 mm).

The product thus obtained is of a hydrophobic nature. The concentration of hydroxyl groups on the surface is 0.60—0.90 per $nm^2$. The product, which has a relatively large BET surface and pore volume and which is, moreover, strong and attrition resistant, is of such a purity that it can be regarded chemically as virtually inert. Such a material is particularly suited as supporting material for catalysts, particularly for those that are prepared by the so-called impregnation method by the take-up of dissolved catalyst components in organophilic and organic solvents.

For various uses, for instance as catalyst support, with the catalyst components being applied in the form of aqueous solutions, it is important for the silicon dioxide to be of a hydrophilic nature. It has been found that the above-mentioned hydrophobic product can be hydroxylated in a simple manner to form a product with a concentration of OH groups on the surface of 3.5—6.0 per $nm^2$ without reduction of the BET surface, pore volume, strength and attrition resistance.

According to the invention this is achieved by subjecting the calcined, hydrophobic product to a static treatment using an excess of aqueous medium. Specifically the product can be treated for 100—200 hours with an excess of a dilute, for instance 15—25% by weight, nitric acid solution at a temperature of between 15 and 35°C. The product may also be treated for 100—200 hours with an excess of distilled water, however then a temperature of between 60 and 90°C has to be chosen.

In applying the process according to the invention an aqueous reaction medium will result after separating off the silicon dioxide precipitate, which medium substantially consists of an ammonium fluoride solution. This solution can be upgraded by concentration to technical ammonium fluoride or be converted into, for instance, alkali metal fluorides or hydrogen fluoride.

The invention will be further elucidated by means of the following examples.

Example I

0.5 litre of an $H_2SiF_6$ solution, having a concentration of 10% by weight, was fed into a reaction vessel of 3 litres, provided with stirrer and cooler. This solution had been prepared by diluting a crude, about 30% by weight $H_2SiF_6$ solution—obtained by washing Si-containing and F-containing off-gases of a phosphoric plant—with water. The solution in the reaction vessel was stirred at a rate of 200 revolutions per minute, while the temperature was kept at 32°C. During stirring and while keeping the temperature at a constant level an ammonium hydroxide solution having a concentration of 25% (wt) was injected just below the skin of the liquid surface at a metering rate of 16.25 cm³ $NH_4OH$ solution per minute. The metering was continued until the pH in the reaction mixture was about 9.0.

The reaction mixture was subsequently filtered, the resulting filter cake (2 gram/minute) washed with distilled water and air-dried at 150°C. The dried cake could be broken up into lumps of 10—30 mm showing a specific surface of 110 m²/g, a pore volume of 0.54 cm³/g and an OH-group concentration on the surface of 5/nm². The strength of these lumps was such that they could be crushed with the fingers.

Part of the filter cake was calcined in a quartz dish in an electric kiln for one hour at 1173°C and subsequently cooled in dry air. Of the product thus obtained the specific surface, pore volume and OH-group concentration were determined. The results are summarized in table I. The product consisted of particles having a diameter of between about 1 and 10 mm. The mechanical strength was so great that it proved impossible to bore a hole into a particle (diameter 8 mm).

Example II

In the same way as in example I part of the filter cake obtained after filtering and drying was calcined for 1 hour to 1155°C. The results are summarized in table I.

Example III

In the same way as in example I the filter cake was calcined for 3 hours to 1173°C. The results are summarized in table I.

Example IV

Part of the calcined product obtained in example I was subjected to a static treatment at room temperature for 120 hours with an excess of 20% (wt)-nitric acid solution, subsequently filtered, washed with water and dried at 150°C. The properties of the resulting product are also summarized in table I.

Example V

Part of the product obtained in example II was subjected to the same treatment as described in example IV. The results are summarized in table I.

Of the product obtained the pore distribution was determined also in a mercury porosimeter of the Carlo Erba type at a mercury pressure of between 1 and 3000 atm. The maximum quantity of mercury forced in corresponds with a pore volume of 0.66 cm³/g. The results found are represented in figure I, where on the axis of the abscissae the pore radius in nm is plotted, and on the axis of ordination the cumulative pore volume in cm³/g is plotted. It shows that most of the pores have a radius of between 10 and 60 nm. Consequently, it here concerns very wide, easily accessible pores.

Example VI

Part of the product obtained in example III was subjected to the same treatment as described in example IV. The results are summarized in table I.

Example VII

Part of the calcined product obtained in example I was subjected to a static treatment at 80°C for 160 hours with an excess of distilled water, subsequently filtered, and dried at 150°C. The properties of the resulting product are also summarized in table I.

Example VIII

Part of the product obtained in example III was subjected to the same treatment as described in example VII. The results are summarized in table I.

0 094 138

TABLE I

| Example No. | Spec. surface in m²/g | Pore volume in cm³/g | OH group concentration per nm² |
|---|---|---|---|
| I | 27 | 0.42 | 0.66 |
| II | 40 | 0.70 | 0.80 |
| III | 11 | 0.60 | 0.60 |
| IV | 19 | 0.50 | 4.10 |
| V | 43 | 0.66 | 3.80 |
| VI | 13.6 | 0.60 | 4.00 |
| VII | 27 | 0.44 | 4.50 |
| VIII | 11.5 | 0.60 | 3.70 |

Example IX

The product of example IV was analyzed via atomic spectrometry. The results are summarized in table II;

TABLE II

| Iron | 24 ppm |
|---|---|
| Aluminium | <10 ppm |
| Potassium | 10 ppm |
| Sodium | 96 ppm |
| Calcium | 12 ppm |
| Magnesium | 11 ppm |
| Lithium | 0.04 ppm |
| Fluorine | 10—100 ppm |
| Phosphorus | <10 ppm |

These results clearly show that in applying the present process a silicon dioxide is obtained—even if contaminated hexafluorosilicic acid is started from—which has such a degree of purity that it is chemically to be regarded as virtually inert. This is of great importance when used as catalyst support.

Example X

Part of the calcined product of example I was separated by screening into a fraction <1.4 mm, a fraction of 1.4—2 mm and a fraction >2 mm. Subsequently the attrition resistance of the screened fraction of 1.4—2 mm was determined by passing this fraction into a fluid bed of glass beads at room temperature and at atmospheric pressure and periodically measuring the loss of weight resulting from blowing out fines. In the fluid bed the chosen silicon dioxide/glass bead weight ratio was 1:5, the diameter of the glass beads being 0.45—0.55 mm and the diameter of the bed 7 cm.

For the purpose of comparison the attrition resistance of a few other materials was determined in the same way, viz.

a) 'Sinterkorund'=a perfectly non-porous substance, obtainable from the firm Otto, having a specific surface <0.1 m²/g and a particle diameter of about 3 mm, more than 99% of which consists of α-alumina.

b) 'K-10'=a catalyst support substantially consisting of α-alumina, obtainable from the firm Otto, having a specific surface of 2 m²/g and a pore volume of 0.3—0.4 cm³/g.

5

c) 'SCS-9'=a catalyst support substantially consisting of α-alumina, obtainable from the firm Rhône-Poulenc, having a specific surface of 7 $m^2/g$ and a pore volume of 0.35 $cm^3/g$.

The results measured are represented in Figure II, where (on the axis of ordination) the loss in weight in % of the original weight is plotted against the fluidizing time in hours (on the axis of the abscissae). It clearly shows that the calcined product obtained in applying the present process shows a substantially lower attrition than the known materials K-10 and SCS-9, while the specific surface is much higher than that of these catalyst supports frequently used in the art. Moreover, the mechanical strength of the calcined product was substantially greater than that of K-10 and SCS-9. The fact was that, unlike the K-10 and SCS-9 particles, it proved impossible to bore a hole into the particles of the first product.

Example XI

The process of example I was repeated on the understanding that the filter cake was washed with a 5% by weight $HNO_3$ solution. The product eventually obtained had a slightly higher specific surface than that of the product of example I, while the calcium and fluorine content was substantially lower.

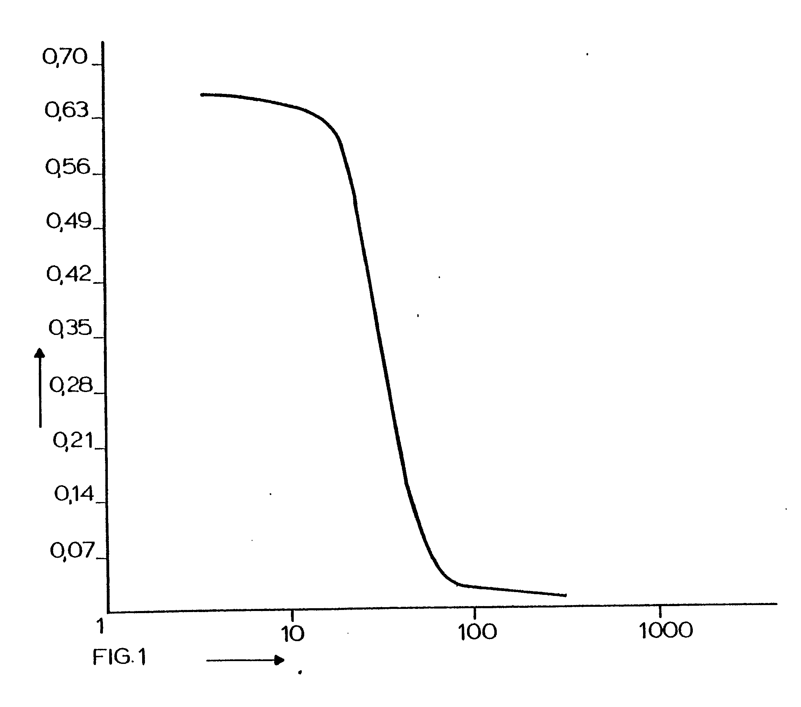

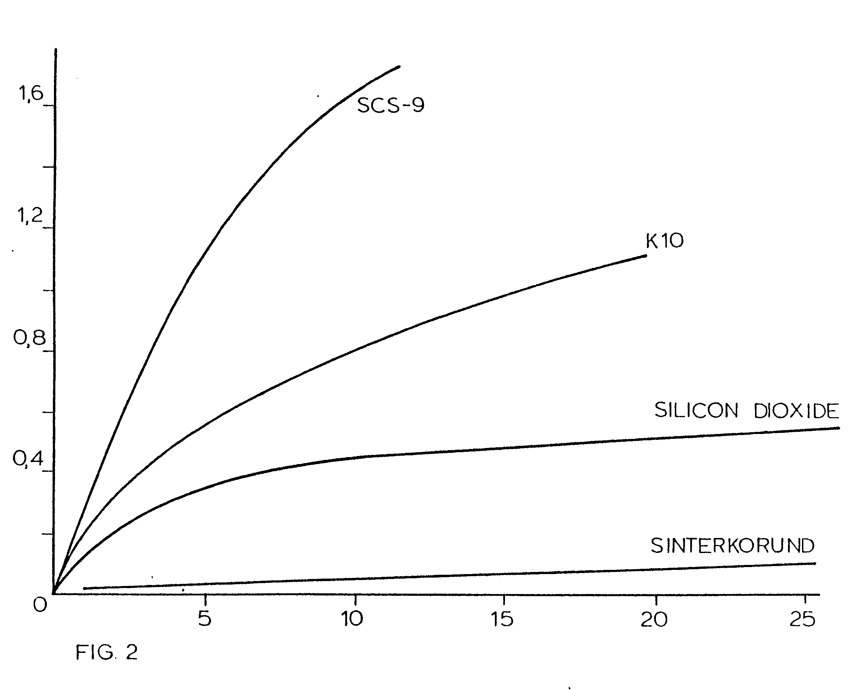

## Claims

1. Process for the preparation of pure silicon dioxide having high mechanical strength by reacting with firm stirring an aqueous solution of hexafluorosilicic acid at a temperature between 25 and 45°C with an ammonium hydroxide solution having a concentration of between 15 and 35% by weight until a final pH of between 8.5 and about 9.2 has been reached in the reaction mixture, separating and washing the precipitated silicon dioxide from the reaction mixture, characterized in that an aqueous solution of hexafluorosilicic acid having a concentration of 6—12% by weight and the ammonium hydroxide solution are gradually reacted by injecting one of the reactants, below the liquid surface into the other reactant or by injecting both reactants below the liquid surface into water, and the precipitated silicon dioxide after washing is calcined by heating to 900—1500°C.

2. Process according to claim 1, characterized in that the hexafluorosilicic acid solution is reacted at 30—35°C with a 20—30% by weight ammonium hydroxide solution until a pH of between 8.9 and 9.1 has been reached in the mixture, and the product is calcined at 1000—1300°C.

3. Process according to claim 1 or 2, characterized in that the mixture is stirred during the reaction at a stirring rate of 150—250 revolutions per minute.

4. Process according to any one of claims 1—3, characterized in that the ammonium hydroxide solution is injected below the liquid surface into the hexafluorosilicic acid solution.

5. Process according to claim 4, characterized in that the ammonium hydroxide solution is metered in a quantity of 2—5 parts by weight per 100 parts by weight hexafluorosilicic acid solution per minute.

6. Process according to any one of claims 1—5, characterized in that the silicon dioxide separated off is washed with water or with a solution of a mineral acid.

7. Pure silicon dioxide having a sodium content <100 ppm, obtained while applying the process according to any one of claims 1—6, characterized in that it consists of particles having an average diameter of between 1 and 10 mm, a specific surface—measured by the BET method—of between 10 and 100 $m^2/g$, a pore volume—measured by the mercury intrusion method of between 0.3 and 1.0 $cm^3/g$, with more than 80% of the pores having a radius of between 10 and 60 nm, an attrition resistance—expressed in % loss in weight—<0.5% after 10 hours' fluidizing and <0.6% after 25 hours' fluidizing, and a concentration of hydroxyl groups on the surface of 0.60—0.90 per $nm^2$.

8. Silicon dioxide particles according to claim 7, characterized in that the specific surface is 10—50 $m^2/g$ and the pore volume 0.4—0.8 $cm^3/g$.

9. Process for the preparation of hydrophilic silicon dioxide, characterized in that calcined silicon dioxide as obtained according to any one of claims 1—6 is treated with an excess of aqueous medium.

10. Process according to claim 9, characterized in that the calcined silicon dioxide is treated for 100—200 hours with a 15—25% by weight nitric acid solution at a temperature of between 15 and 35°C.

11. Process according to claim 9, characterized in that the calcined silicon dioxide is treated for 100—200 hours with distilled water at a temperature of between 60 and 90°C.

12. Hydrophilic silicon dioxide obtained while applying the process according to any one of claims 9—11, characterized in that the concentration of hydroxyl groups at the surface is 3.5—6.0 per $nm^2$.

## Patentansprüche

1. Verfahren zur Herstellung von reinem Siliziumdioxid hoher mechanischer Festigkeit durch Umsetzung unter starkem Rühren einer wässerigen Lösung von Hexafluorkieselsäure bei einer Temperatur zwischen 25 und 45°C mit einer Ammoniumhydroxidlösung von einer Konzentration zwischen 15 und 35 Gew.-%, bis schließlich ein pH-Wert zwischen 8,5 und etwa 9,2 im Reaktionsgemisch erreicht wurde, Abtrennung und Waschen des aus dem Reaktionsgemisch ausgefällten Siliziumdioxids, dadurch gekennzeichnet, daß eine wässerige Lösung von Hexafluorkieselsäure mit einer Konzentration von 6—12 Gew.-% und die Ammoniumhydroxidlösung allmählich umgesetzt werden, indem man einen der Reaktanten unter der Flüssigkeitsoberfläche in den anderen Reaktanten oder beide Reaktanten unter der Flüssigkeitsoberfläche in Wasser injiziert und das ausgefällte Siliziumdioxid nach dem Waschen durch Erhitzen auf 900—1500°C kalziniert.

2. Verfahren nach Anspruch 1, dadurch gekennzeichnet, daß die Hexafluorkieselsäurelösung bei 30—35°C mit einer 20—30 gewichtsprozentigen Ammoniumhydroxidlösung, bis ein pH zwischen 8,9 und 9,1 im Gemisch erreicht wurde, umgesetzt und das Produkt bei 1000—1300°C kalziniert wird.

3. Verfahren nach Anspruch 1 oder 2, dadurch gekennzeichnet, daß das Gemisch während du Umsetzung mit einer Rührgeschwindigkeit von 150—250 Umdrehungen pro Minute gerührt wird.

4. Verfahren nach einem der Ansprüche 1—3, dadurch gekennzeichnet, daß die Ammoniumhydroxidlösung unter der Flüssigkeitsoberfläche in die Hexafluorkieselsäurelösung injiziert wird.

5. Verfahren nach Anspruch 4, dadurch gekennzeichnet, daß die Ammoniumhydroxidlösung in einer Menge von 2—5 Gew.-Teilen pro 100 Gew.-Teile Hexafluorkieselsäurelösung pro Minute eingemessen wird.

6. Verfahren nach einem der Ansprüche 1—5, dadurch gekennzeichnet, daß das abgetrennte Siliziumdioxid mit Wasser oder mit einer Lösung einer Mineralsäure gewaschen wird.

7. Reines Siliziumxdioxid mit einem Natriumgehalt <100 ppm, erhalten unter Anwendung des Verfahrens nach irgendeinem der Ansprüche 1—6, dadurch gekennzeichnet, daß es aus Teilchen mit einem durchschnittlichen Durchmesser zwischen 1 und 10 mm, einer spezifischen Oberfläche—gemessen nach der BET-Methode—zwischen 10 und 100 m²/g, einem Porenvolumen—gemessen nach der Quecksilbereindringmethode zwischen 0,3 und 1,0 cm³/g, wobei mehr als 80% der Poren einen Radius zwischen 10 und 60 nm besitzen, einer Abriebfestigkeit—ausgedrückt in % Gewichtsverlust—von <0,5 nach 10 Sunden Fluidisieren und <0,6% nach 25 Stunden Fluidisieren, und einer Konzentration an Hydroxylgruppen auf der Oberfläche von 0,60—0,90 pro nm², besteht.

8. Siliziumdioxidteilchen nach Anspruch 7, dadurch gekennzeichnet, daß die spezifische Oberfläche 10—50, m2 und das Porenvolumen 0,4—0,8 cm³/g beträgt.

9. Verfahren zur Herstellung von hydrophilem Siliziumdioxid, dadurch gekennzeichnet, daß das kalzinierte Siliziumdioxid, erhalten nach irgendeinem der Ansprüche 1—6, mit einem überschuß eines wässerigen Mediums behandelt wird.

10. Verfahren nach Anspruch 9, dadurch gekennzeichnet, daß das kalzinierte Siliziumdioxid während 100—200 Stunden mit einer 15—25 gewichtsprozentigen Salpetersäurelösung bei einer Temperatur zwischen 15 und 25°C behandelt wird.

11. Verfahren nach Anspruch 9, dadurch gekennzeichnet, daß das kalzinierte Siliziumdioxid während 100—200 Stunden mit destilliertem Wasser bei einer Temperatur zwischen 60 und 90°C behandelt wird.

12. Hydrophiles Siliziumdioxid, erhalten unter Anwendung des Verfahrens nach irgendeinem der Ansprüche 9—11, dadurch gekennzeichnet, daß die Konzentration der Hydroxylgruppen auf der Oberfläche 3,5—6,0 pro nm² beträgt.

## Revendications

1. Procédé de préparation de dioxyde de silicium pur présentant une résistance mécanique élevée, en faisant réagir avec une vive agitation une solution aqueuse d'acide hexafluorosilicique à une température entre 25 et 45°C avec une solution d'hydroxyde d'ammonium ayant une concentration de 15 à 35% en poids jusqu'à atteindre un pH final compris entre 8,5 et environ 9,2, en séparant et en lavant le dioxyde de silicium précipité du mélange de réaction, caractérisé en ce qu'on fait réagir progressivement une solution aqueuse d'acide hexafluorosilicique ayant une concentration de 6 à 12% en poids et une solution d'hydroxyde d'ammonium en injectant l'un des réactifs au-dessous de la surface liquide dans l'autre réactif ou en injectant les deux réactifs au-dessous de la surface liquide dans l'eau et on calcine le dioxyde de silicium précipité après lavage en le chauffant à une température de 900 à 1500°C.

2. Procédé selon la revendication 1, caractérisé en ce qu'on fait réagir la solution d'acide hexafluorosilicique à 30—35°C avec une solution de 20 à 30% en poids d'hydroxyde d'ammonium jusqu'à atteindre un pH du mélange de 8,9 à 9,1 et on calcine le produit à 1000—1300°C.

3. Procédé selon la revendication 1 ou 2, caractérisé en ce qu'on agite le mélange pendant la réaction à un taux d'agitation de 150 à 250 révolutions par minute.

4. Procédé selon l'une quelconque des revendications 1 à 3, caractérisé en ce qu'on injecte la solution d'hydroxyde d'ammonium au-dessous de la surface liquide dans la solution d'acide hexafluorosilicique.

5. Procédé selon la revendication 4, caractérisé en ce qu'on dose la solution d'hydroxyde d'ammonium en une quantité de 2 à 5 parties en poids par 100 parties en poids de solution d'acide hexafluorosilicique par minute.

6. Procédé selon l'une quelconque des revendications 1 à 5, caractérisé e ce qu'on lave le dioxyde de silicium séparé avec de l'eau ou avec une solution d'un acide minéral.

7. Dioxyde de silicium pur ayant une teneur en sodium inférieure à 100 ppm qu'on obtient par la mise en oeuvre du procédé selon l'une quelconque des revendications 1 à 6, caractérisé en ce qu'il consiste en particules ayant un diamètre moyen de 1 à 10 mm, une surface de contact spécifique mesurée par le procédé BET, comprise entre 10 et 100 m²/g, un volume de pores, mesuré par le procédé d'intrusion de mercure) de 0,3 à 1,0 cm³/g, plus de 80% des pores ayant un rayon de 10 à 60 nm, une résistance à l'usure

7

exprimée en % de perte de poids <0,5% après 10 heures de fluidisation et <0,6% après 25 heures de fluidisation et une concentration des groupes hydroxyle à la surface de 0,60 à 0,90 par nm$^2$.

8. Particules de dioxyde de silicium selon la revendication 7, caractérisées en ce que la surface de contact spécifique est de 10 à 50 m$^2$/g et le volume des pores est de 0,4 à 0,8 cm$^3$/g.

9. Procédé de préparation de dioxyde de silicium hydrophile, caractérisé en ce qu'on traite le dioxyde de silicium calciné tel qu'obtenu selon l'une quelconque des revendications 1 à 6 avec un excès d'un milieu aqueux.

10. Procédé selon la revendication 9, caractérisé en ce qu'on traite le dioxyde de silicium calciné pendant 100 à 200 heures avec une solution de 15 à 25% en poids d'acide nitrique à une température de 15 à 35°C.

11. Procédé selon la revendication 9, caractérisé en ce qu'on traite le dioxyde de silicium calciné pendant 100 à 200 heures avec de l'eau distillée à une température de 60 à 90°C.

12. Dioxyde de silicium hydrophile obtenu par application du procédé selon l'une quelconque des revendications 9 à 11, caractérisé en ce que la concentration des groupes hydroxyle à la surface est de 3,5 à 6,0 par nm$^2$.

FIG.1

FIG. 2